# EUROPEAN PATENT APPLICATION

(11) **EP 4 064 642 A1**
(43) Date of publication of application: **28.09.2022**
(21) Application number: 21199755.6
(22) Date of filing: 29.09.2021
(51) Int. Cl.: H04L 47/70, H04L 41/044

(54) **METHOD AND EDGE ORCHESTRATION PLATFORM FOR PROVIDING CONVERGED NETWORK INFRASTRUCTURE**

(30) Priority: 23.03.2021 IN 202111012567
(71) Applicant: Sterlite Technologies Limited, Haryana 122002 (IN)
(72) Inventor: BAJPAI, Anurag, 122002 Haryana (IN); BASU, Indranil, 122002 Haryana (IN)
(74) Representative: Hepworth Browne

(57) **Abstract**

The invention relates to a method and an edge orchestrator platform (100) for providing a converged network infrastructure includes a multi access controller (110) connected to edge nodes (200), network controllers (300), user devices (400) and an intelligent allocation unit (120) for dynamic allocation of resources from the plurality of edge nodes (200) to one or more applications at the plurality of network controllers (300). In particular, the user devices (400) are connected to network controllers (300). Moreover, the edge orchestrator platform (100) is connected to a global service orchestrator (1102a).

## Description

### TECHNICAL FIELD

Embodiments of the present invention relate to a field communication system. And more particularly, relates to a method and an edge orchestrator platform for providing a converged network infrastructure.

The present application claims the benefit of Indian Application No. 202111012567 titled "Method and Edge Orchestration Platform for Providing Converged Network Infrastructure" filed by the applicant on 23^{rd} March 2022, which is incorporated herein by reference in its entirety.

### Background Art

In general, an edge orchestration is a modern management and orchestration platform that provides enterprise grade solutions to a management of edge deployment across both enterprise user's edges and telecom service provider edges. In existing methods and systems, mesh controllers within an open edge orchestrator provides mesh services and utilization of resources from multiple edge nodes.

US patent application "US20170048308A1" discloses a method and apparatus for network conscious edge-to-cloud data aggregation, connectivity, analytics and actuation operate for the detection and actuation of events based on sensed data, with the assistance of edge computing software-defined fog engine with interconnect with other network elements via programmable internet exchange points to ensure end-to-end virtualization with cloud data centers and hence, resource reservations for guaranteed quality of service in event detection.

WIPO patent application "WO2017035536A1" discloses a method for enabling intelligence at the edge. Features include triggering by sensor data in a software layer hosted on either a gateway device or an embedded system. Software layer is connected to a local-area network. A repository of services, applications, and data processing engines is made accessible by the software layer. Matching the sensor data with semantic descriptions of occurrence of specific conditions through an expression language made available by the software layer. Automatic discovery of pattern events by continuously executing expressions. Intelligently composing services and applications across the gateway device and embedded systems across the network managed by the software layer for chaining applications and analytics expressions. Optimizing the layout of the applications and analytics based on resource availability. Monitoring the health of the software layer. Storing of raw sensor data or results of expressions in a local time-series database or cloud storage. Services and components can be containerized to ensure smooth running in any gateway environment.

However, the existing methods and systems are not flexible enough to switch between multiple network controllers. Further, the existing methods and systems do not provide efficient resource utilization and involve high latency computation.

Thus, in view of the above discussion and prior art references, there is an urgent need for a technical solution that overcomes the above stated limitations in the prior arts by developing a dynamic selection of network controllers corresponding to different last mile networks and respective adjustment of workloads on different edge nodes to serve an application.

Hence, the present invention focuses on edge orchestration platforms for providing converged network infrastructure.

Any references to methods, apparatus or documents of the prior art are not to be taken as constituting any evidence or admission that they formed, or form part of the common general knowledge.

### SUMMARY OF THE INVENTION

Embodiments of the present disclosure provide An embodiment of the present invention relates to an edge orchestrator platform for providing a converged network infrastructure comprising a multi access controller operably connected to a plurality of edge nodes, a plurality of network controllers, and a plurality of user devices, the plurality of user devices are operably connected to the plurality of network controllers and an intelligent allocation unit is operably configured for dynamic allocation of resources from the plurality of edge nodes to one or more applications at the plurality of network controllers. In particular, the edge orchestrator platform is connected to a global service orchestrator.

In accordance with an embodiment of the present invention, the edge orchestrator platform further includes a processor coupled with the multi access controller, the intelligent allocation unit, a switching unit, a resource unit, and a memory for storing instructions to be executed by the processor.

In accordance with an embodiment of the present invention, the plurality of network controllers corresponds to one or more last mile networks. In particular, the one or more last mile networks comprises a passive optical network, a radio access network, and a Wireless Fidelity (Wi-Fi) network.

In accordance with an embodiment of the present invention, the switching unit is configured to switch a network connection from a first network controller to a second network controller in the plurality of network controllers.

In accordance with an embodiment of the present invention, the resource unit is configured to push one or more network resources from the global service orchestrator to at least one of the edge nodes.

In accordance with an embodiment of the present invention, the edge orchestrator platform is a local orchestrator to the plurality of edge nodes and the plurality of network controllers.

The edge orchestrator platform adjusts one or more workloads on at least one of the edge nodes by enabling one or more vendor independent application programming interfaces (APIs).

In accordance with an embodiment of the present invention, the plurality of edge nodes is selected from on-premise server edges, access server edges, regional server edges.

In accordance with an embodiment of the present invention, the plurality of user devices is selected from a smartphone, a smart watch, a smart TV, a smart washing machine, a Personal Digital Assistants (PDAs), a tablet computer, a laptop computer, a virtual reality device, an immersive system, an Internet of Things (loTs) and alike.

In accordance with an embodiment of the present invention, the plurality of network controllers is selected from a Fiber to the-X (FTTx) controller, a Wi-Fi controller, and an open RAN controller.

Another embodiment of the present invention relates to a method for providing a converged network infrastructure using an edge orchestration platform connected to a global service orchestrator. The method includes steps of connecting the edge orchestrator platform with a plurality of edge nodes, a plurality of network controllers and user devices and connecting a plurality of user devices to the plurality of network controllers, pushing one or more resources from the global service orchestrator to the edge orchestration platform, dynamically allocating one or more resources from the plurality of edge nodes to one or more applications at the plurality of network controllers, communicating between the edge orchestrator platform and the plurality of network controllers and dynamically selecting a network controller from the plurality of network controllers for facilitating one or more applications.

In accordance with an embodiment of the present invention, the plurality of network controllers corresponds to one or more last mile networks. Particularly, the plurality of network controllers includes at least one or more of passive optical networks, a radio access network, and a Wi-Fi network. Moreover, the plurality of edge nodes (200) is selected from on-premise server edges, access server edges, regional server edges and plurality of network controllers is selected from a Fiber to the-X (FTTx) controller, a Wi-Fi controller, and an open RAN controller.

In accordance with an embodiment of the present invention, the method includes connecting the edge orchestrator platform to a global service orchestrator. Particularly, the edge orchestrator platform is a local orchestrator to the plurality of edge nodes and the plurality of network controllers.

In accordance with an embodiment of the present invention, the method comprises switching a network connection from a first network controller to a second network controller in the plurality of network controllers.

In accordance with an embodiment of the present invention, the method further includes adjusting one or more workloads on at least one of edge nodes (200) by enabling one or more vendor independent application programming interfaces (APIs).

In accordance with an embodiment of the present invention, the method further includes steps of coupling a processor with the multi access controller, the intelligent allocation unit, the switching unit, the resource unit and storing a plurality of instructions to be executed by the processor and a memory.

The foregoing solutions of the disclosure provides a method and edge orchestration platform for providing converged network infrastructure.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Having thus described the disclosure in general terms, reference will now be made to the accompanying figures, wherein:
Fig. 1 is a block diagram illustrating an edge orchestrator platform for providing a converged network infrastructure in accordance with an embodiment of the present invention;
Fig. 2 is a flow chart illustrating a method for providing the converged network infrastructure in accordance with an embodiment of the present invention.
Fig. 3A is a block diagram illustrating an exemplary architecture implemented for the converged network infrastructure in accordance with an embodiment of the present invention;
Fig. 3B is a block diagram illustrating an exemplary architecture implemented for the converged network infrastructure in accordance with an embodiment of the present invention;
Fig. 4 is a flowchart illustrating a method for providing the converged network infrastructure in accordance with an embodiment of the present invention.

### REFERENCE LIST

Edge Orchestrator Platform 100
Multi Access Controller 110
Intelligent Allocation Unit 120
Switching Unit 130
Resource Unit 140
Processor 150
Memory 160
Edge Nodes 200
Network Controllers 300
User Devices 400
External Entity 1102
Self-service and Reporting Ui Portal 1104
Application Profiles Manager 1106
Policy Manager 1108
Application/Service Marketplace Manager 1110
Workflow Manager 1112
Data Collection/Distribution Manager 1114
Application Manager 1116
Network Function Lifecycle Manager 1118
Machine Learning Inference Manager 1120
Multi Access Controller Manager 1122
Edge Management Controller 1124
On-premise Server Edges 1126a
Access Server Edges 1126b
Regional Server Edges 1126c
Centralized Data Center Server 1128
Pfttx Controller 1130a
Pwifi Controller 1130b
Ran Controller 1130c
Last Mile Network 1132
Sdwan Network 1134
Open Transport Network 1136

The method and edge orchestration platform are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

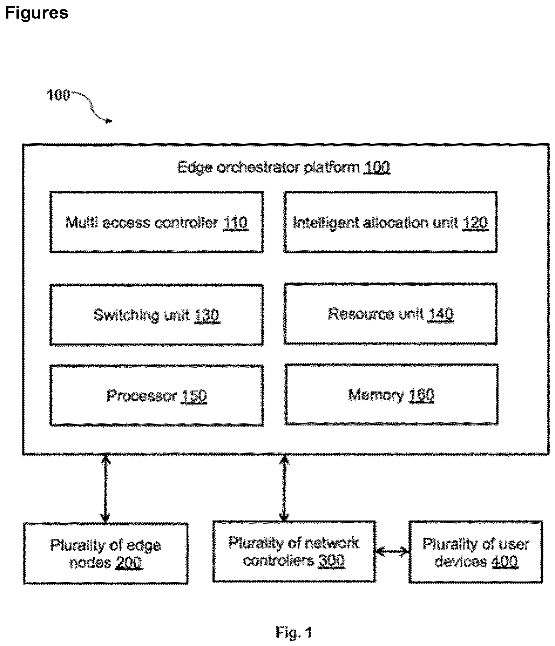

Fig. 1 is a block diagram illustrating an edge orchestrator platform for providing a converged network infrastructure in accordance with an embodiment of the present invention. The converged network infrastructure structures one or more wireless communication systems which groups multiple components into a single optimized computing package.

In particular, the edge orchestrator platform (100) includes a multi access controller (110), an intelligent allocation unit (120), a switching unit (130), a resource unit (140), a processor (150), and a memory (160). The processor (150) is coupled with the multi access controller (110), the intelligent allocation unit (120), the switching unit (130), the resource unit (140), and the memory (160).The multi access controller (110) is connected to a plurality of edge nodes (200), a plurality of network controllers (300), and a plurality of user devices (400). And, the plurality of user devices (400) is connected to the plurality of network controllers (300).

In accordance with an embodiment of the present invention, the plurality of edge nodes (200) may be, for example, but not limited to, on-premise server edges, access server edges, regional server edges or the like.

In accordance with an embodiment of the present invention, the plurality of edge nodes (200) may be a generic way of referring to any edge device, an edge server, or an edge gateway on which edge computing can be performed.

In accordance with an embodiment of the present invention, the plurality of user devices (400) may be, for example, but not limited to, smart phones, smart watches, smart TVs, smart washing machines, Personal Digital Assistants (PDAs), tablet computers, laptop computers, virtual reality devices, immersive systems, and Internet of Things (loTs).

In accordance with an embodiment of the present invention, the plurality of network controllers (300) may be, for example, but not limited to, Fiber to the-X (FTTx) controllers, Wi-Fi controllers, open RAN controllers or the like. The FTTx controllers may be, for example, but not limited to, a fiber to the home and a fiber to the premises.

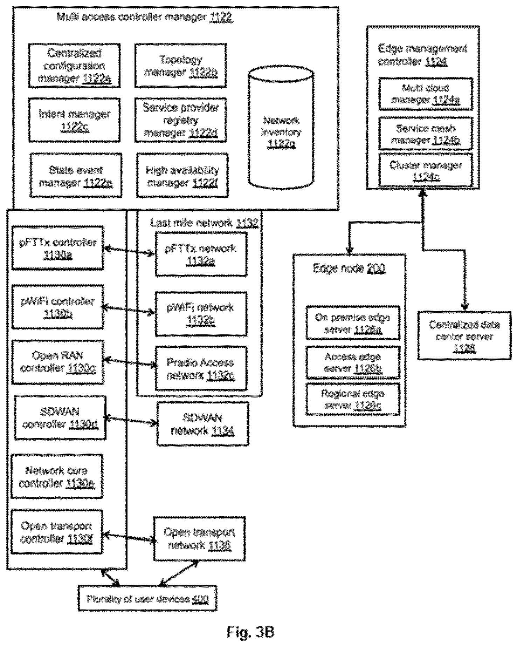

In accordance with an embodiment of the present invention, the plurality of network controllers (300) corresponds to one or more last mile networks (1132) (as shown in FIG. 3b). The one or more last mile networks (1132) may be, for example, but not limited to, a passive optical network (1132a), a radio access network (1132c), and a Wireless Fidelity (Wi-Fi) network (1132b).

In accordance with an embodiment of the present invention, the multi access controller (110) may be implemented by analog or digital circuits such as logic gates, integrated circuits, microprocessors, microcontrollers, memory circuits, passive electronic components, active electronic components, optical components, hardwired circuits, or the like, and may optionally be driven by firmware.

In accordance with an embodiment of the present invention, the intelligent allocation unit (120) may be configured to dynamically allocate one or more resources from the plurality of edge nodes (200) to one or more applications at the plurality of network controllers (300). The resource may be, for example, but not limited to, a physical resource, a function, virtual machine, application programming interface, virtual functions or the like. The function may be, for example, but not limited to, a network function, a service virtualization function, a resource management function, a node management function. The application may be, for example, but not limited to, a virtual reality (VR) application, an enterprise application, a content delivery application, a gaming application, a networking application or the like.

In accordance with an embodiment of the present invention, the intelligent allocation unit (120) may be implemented by analog or digital circuits such as logic gates, integrated circuits, microprocessors, microcontrollers, memory circuits, passive electronic components, active electronic components, optical components, hardwired circuits, or the like, and may optionally be driven by firmware.

In accordance with an embodiment of the present invention, the switching unit (130) may be configured to switch a network connection i.e., from a first network controller to a second network controller in the plurality of network controllers (300). In particular, the switching of the network connection from the first network controller to the second network controller occurs based on demand. Moreover, the switching unit (130) may be implemented by analog or digital circuits such as logic gates, integrated circuits, microprocessors, microcontrollers, memory circuits, passive electronic components, active electronic components, optical components, hardwired circuits, or the like, and may optionally be driven by firmware.

In accordance with an embodiment of the present invention, the resource unit (140) may be configured to push one or more network resources from a global service orchestrator (1102a) to at least one of the edge nodes (200). In particular, the resource unit (140) may be implemented by analog or digital circuits such as logic gates, integrated circuits, microprocessors, microcontrollers, memory circuits, passive electronic components, active electronic components, optical components, hardwired circuits, or the like, and may optionally be driven by firmware.

In accordance with an embodiment of the present invention, the edge orchestrator platform (100) acts as a local orchestrator to the plurality of edge nodes (200) and the plurality of network controllers (300). Further, the edge orchestrator platform (100) is connected to a global service orchestrator (GSO) (1102a). The GSO (1102a) receives a service order request from a self-service portal. Based on a model-driven service design concept, the GSO (1102a) implements a rapid conversion of user orders to network resources (e.g., Software-defined networking (SDN)/network virtual function (NFV) resources, etc.), and provides an entire process management of automatic service fulfilment and assurance. Further, The GSO (1102a) provides orchestration capabilities across vendors, platforms, virtual and physical networks. The GSO (1102a) provides full lifecycle management and assurance for services based on closed-loop policy control. The closed-loop policy control is defined by a service provider. Further, the GSO (1102a) provides a unified capability exposure interface to accelerate service innovation and new services onboarding in the edge orchestrator platform (100).

In accordance with an embodiment of the present invention, the edge orchestrator platform (100) performs dynamic switching of the plurality of network controllers (300) (corresponding to different last mile networks) and respective adjustment of workloads on the plurality of edge nodes (200) for efficient resource allocation from the plurality of edge nodes (200). Particularly, the edge orchestrator platform (100) adjusts one or more workloads on at least one of the edge nodes (200) by enabling one or more vendor independent APIs. The vendor independent API is a publicly available application programming interface that provides developers with programmatic access to a proprietary software application or web service.

In accordance with an embodiment of the present invention, the edge orchestrator platform (100) acts as a local orchestrator to the plurality of edge nodes (200) and connects with the global service orchestrator (1102a), so as to provide dynamic edge slicing, allocation of resources to last mile connectivity network, switching of network and other edge services to the end users in an efficient manner.

In an example, high bandwidth requirement applications such as Augmented Reality (AR), Virtual Reality (VR) or vehicle to vehicle (V2V) communication that are required to be processed with ultra-low latency may benefit a lot using the proposed edge orchestrator platform (100), as all the intelligence and required application data for facilitating services (e.g., resource allocation, switching of networks) are pushed at the local edge nodes (200), by the GSO (1102a).

In accordance with an embodiment of the present invention, the edge orchestrator platform (100), the multi access controller (110) is connected with multiple network controllers (300) and the plurality of edge nodes (200) to enable switching of connection between different networks. In particular, the edge orchestrator platform (100) supports a large number of edge clouds and manages the network edge, the on-premise edge, and an enterprise edge in a consistent manner. Moreover, the edge orchestrator platform (100) supports various types of applications and services that are required to be supported in a cloud native architecture. Further, the edge orchestrator platform (100) manages dynamic configuration of various edge nodes, creates dynamic network slices, and provides live migration support. Subsequently, in the edge orchestrator platform (100), the applications at the edges can sit in multiple cloud infrastructure, for example, Amazon Web Service (AWS)^{®}, Azure^{®}, On-premises software, a Google Cloud Platform (GCP)^{®}, and Telco Cloud^{®} etc.

The edge orchestrator platform (100) may support modular architecture, highly programmable via network APIs and policy management. The proposed edge orchestrator platform (100) may support real time processing and communication between distributed endpoints and creates the need for efficient processing at the network edge. The proposed edge orchestrator platform (100) may be implemented in augmented and virtual reality system, autonomous cars, drones, IOT with smart cities.

In accordance with an embodiment of the present invention, the edge orchestrator platform (100) may support high degrees of automation and may be able to adapt and perform as traffic volume and characteristics change. The edge orchestrator platform (100) may increase the value by reducing cycle times, delivering security/performance/reliability and cost performance.

The edge orchestrator platform (100) may provision infrastructure required to set up day 0 environment. The edge orchestrator platform (100) may be operated with K8 Clusters to deploy workloads, registers the Kubernetes cluster along with credentials. In the edge orchestrator platform (100), as workloads be placed across different edge nodes, networks supporting the same may also be created and terminated dynamically. As the edge orchestrator platform (100) may support multiple application providers, the edge orchestrator platform (100) may be required to support multi-tenant environment to keep data and operations separate. The edge orchestrator platform (100) may help in creating composite applications and associating multiple applications. The composite application may be instantiated for different purposes and this to be supported through profiles. The edge orchestrator platform (100) may select right locations to place a constituent application for the composite application. In order to create additional resources to be deployed, the edge orchestrator platform (100) may modify the resources created so far and delete existing resources. With a deployment intent support, the edge orchestrator platform (100) may be able instantiate and terminate the application and also may be able to make upgrades to run the composite application. The edge orchestrator platform (100) may collect various metrics of each service and may provide a way for training and inference to do closed loop automations.

In accordance with an embodiment of the present invention, the edge orchestrator platform (100) may use a smaller number of resources. The edge orchestrator platform (100) may be operated under cloud native microservices principles. The edge orchestrator platform (100) may use Helm Based Kubernetes deployments. The Helm Based Kubernetes Deployment is used to tell Kubernetes how to create or modify instances of the pods that hold a containerized application. The deployments can scale the number of replica pods, enable rollout of updated code in a controlled manner, or roll back to an earlier deployment version if necessary. In the edge orchestrator platform (1000), Cloud Native Computing Foundation (CNCF) projects are used for logging, tracing and metric monitoring and a stateless design used for a distributed lock.

In accordance with an embodiment of the present invention, the edge orchestrator platform (100) may be able to address a large number of edge clouds, switches at edges, and support various edge controller technologies. The edge orchestrator platform (100) may support infrastructure verifications and secure secrets/keys. The edge orchestrator platform (100) has very low latency, high performance, performance determinism, data reduction, and lesser utilization of resources. The edge orchestrator platform (100) is easy to upgrade and provide quick bring up of the edge clouds. The edge orchestrator platform (100) provides better traffic redirection and contextual information.

Table 1 given below illustrates a list of requirements for the edge orchestrator platform (100):

**Table 1: List of Requirements**

| **Requirements** | **Edge orchestrator platform (100)** |
|---|---|
| **Scalability** | Optimization needed to address large number of edge-clouds - Edge Cloud Provider - Parent-Child Open Network Automation Platform (ONAP)(Distributed/Delegated - domain orchestration), Fabric Control, Closed loop |
| **Security** | Mutual Transport Layer Security (TLS) with Edges, Secrets/keys protection, hardware rooted security, verification of edge stack, centralized security for Function as a service (FaaS) |
| **Performance** | Containerized Virtual Network Functions (VNFs), Single-root input/output virtualization (SRIOV)-NIC, Field-programmable gate array (FPGA)-NIC support |
| **Edge App provisioning** | Create Edge App/Service, instantiate Edge APP/Service, provide Edge App/Service status, Edge App/Service Analytics, Analytics Aggregation of statistics & machine learning (ML) analytics for various edge deployments |
| **Container & VNF Deployments** | Create Cloud-native Network Function (CNFs)/VNFs, instantiate CNFs/VNFs, CNFs and VNFs Analytics |

In accordance with an embodiment of the present invention, the processor (150) is configured to execute instructions stored in the memory (160) and to perform various processes. The communicator (not shown) is configured for communicating internally between internal hardware components and with external devices via one or more networks. The memory (160) also stores instructions to be executed by the processor (150).

In accordance with an embodiment of the present invention, at least one of the plurality of modules may be implemented through an Al (artificial intelligence) model. A function associated with Al may be performed through a non-volatile memory, a volatile memory, and the processor. The processor (150) may include one or more processors. The one or more processors may be a general purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU).

The one or more processors control processing of the input data in accordance with a predefined operating rule or artificial intelligence (Al) model stored in the non-volatile memory and the volatile memory. The predefined operating rule or artificial intelligence model is provided through training or learning, such as by applying a learning algorithm to a plurality of learning data, a predefined operating rule or Al model of a desired characteristic is made. The learning may be performed in a device and/or may be implemented through a separate server/system. The Al model may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

Although FIG. 1 shows various hardware components of the edge orchestrator platform (100), it is to be understood that other aspects are not limited thereon. In other implementations, the edge orchestrator platform (100) may include less or more number of components. Further, the labels or names of the components are used only for illustrative purposes and do not limit the scope of the invention. One or more components can be combined together to perform the same or substantially similar function in the edge orchestrator platform (100).

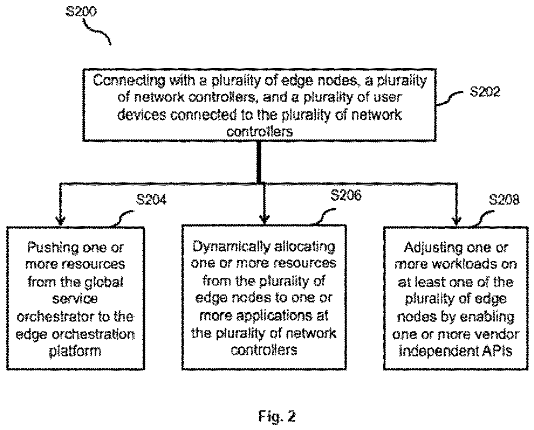

Fig. 2 is a flow chart illustrating a method for providing the converged network infrastructure in accordance with an embodiment of the present invention. The steps (S202-S208) are performed by the edge orchestrator platform (100).

At S202, the plurality of edge nodes (200) are connected to the plurality of network controllers (300), and the plurality of user devices (400) are connected to the plurality of network controllers (300).

At S204, the one or more resources are pushed from the global service orchestrator (1102a) to the edge orchestration platform (100).

At S206, the one or more resources are dynamically allocated from the plurality of edge nodes (200) to one or more applications at the plurality of network controllers (300).

At S208, the one or more workloads are adjusted on at least one of the plurality of edge nodes (200) by enabling one or more vendor independent APIs.

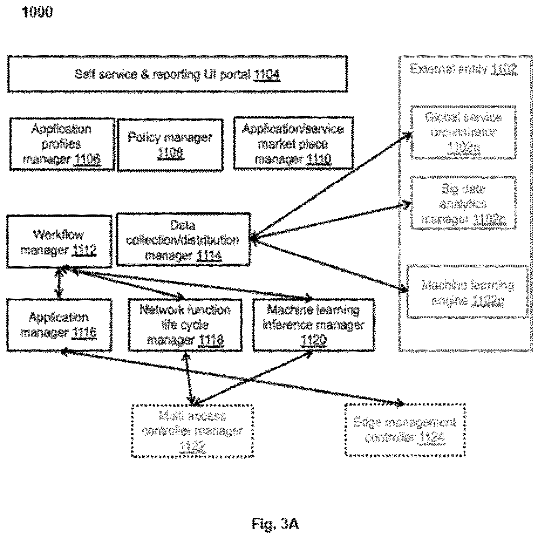

Fig. 3A and Fig. 3B are block diagrams illustrating an exemplary architecture implemented for the converged network infrastructure in accordance with one or more embodiments of the present invention. In particular, the architecture (1000) includes an external entity (1102), a self-service and reporting UI portal (1104), an application profiles manager (1106), a policy manager (1108), an application/service marketplace manager (1110), a workflow manager (1112), a data collection/distribution manager (1114), an application manager (1116), a network function lifecycle manager (1118), a machine learning inference manager (1120), a multi access controller manager (1122), an edge management controller (1124), a centralized data center server (1128), the last mile network (1132) and the plurality of user devices (400).

Further, the external entity (1102) includes a global service orchestrator (1102a), a big data analytics manager (1102b), and a machine learning engine (1102c).

In accordance with an embodiment of the present invention, the data collection/distribution manager (1114) is coupled and operated with the global service orchestrator (1102a), the big data analytics manager (1102b), and the machine learning engine (1102c). Particularly, the data collection/distribution manager (1114) may enable an extensive telemetry needed to support logging, monitoring and tracing of edge cloud components. Moreover, the data collection/distribution manager (1114) distributes the data to the global service orchestrator (1102a), the big data analytics manager (1102b), and the machine learning engine (1102c). Furthermore, the data collection/distribution manager (1114) have support for both real time and batch processing of data.

In accordance with an embodiment of the present invention, the self-service and reporting UI portal (1104) may provide the users with an intuitive role based user interface (UI) access to various edge management services. Also, in the self-service and reporting UI portal (1104), a dashboard may facilitate a real time monitoring and reporting of various KPIs running in the edge cloud.

In accordance with an embodiment of the present invention, the global service orchestrator (1102a) may be responsible for maintaining an overall view of a multi-access edge computing (MEC) system based on a deployed MEC host, resources, MEC services, and topology. Particularly, the global service orchestrator (1102a) may also be responsible for on-boarding of application packages, including checking an integrity and authenticity of the application packages, validating application rules and requirements and if necessary adjusting them to comply with operator policies, keeping a record of on-boarded application packages, and preparing the virtualization infrastructure manager(s) to handle the applications. Moreover, the global service orchestrator (1102a) may be responsible for selecting appropriate MEC host(s) for application instantiation based on constraints, such as latency, available resources, and available services. Furthermore, the global service orchestrator (1102a) may be responsible for triggering application instantiation and termination and triggering application relocation as needed when supported.

In accordance with an embodiment of the present invention, the big data analytics manager (1102b) handles huge data received from the plurality of edge nodes (200) and the plurality of user devices (400) in the architecture (1000), so as to reveal trends, hidden patterns, unseen correlations, and achieve automated decision making in the architecture (1000). The operations and functions of machine learning, by using the machine learning engine (1102c)(As explained in Fig. 1).

In accordance with an embodiment of the present invention, the workflow manager (1112) may be coupled and operated with the application manager (1116), the network function lifecycle manager (1118), and the machine learning inference manager (1120). The application manager (1116) manages various application details. Particularly, the network function lifecycle manager (1118) manages a function life cycle of a network. Moreover, the machine learning inference manager (1120) updates the machine learning models running on the plurality of edge nodes (200) and manages different functions of the plurality of edge nodes (200). Further, the machine learning inference manager (1120) may provide a catalog service for the deployment of edge inference models on both enterprise user and service provider edges. And, the multi access controller manager (1122) may be coupled and operated with the network function lifecycle manager (1118) and the machine learning inference manager (1120). Subsequently, the application manager (1116) may be coupled and operated with the edge management controller (1124).

Particularly, the application profiles manager (1106) handle the application profiles received from the plurality of edge nodes (200) and the plurality of user devices (400). And, the policy manager (1108) defines one or more policies for various entities operated in the architecture (1000). Further, the policy manager (1108) may enable the support for business level rules driven support which is required to put control policies to management edge application/ services and infrastructure resources. Also, the policy manager (1108) may enable the support for the composite application that may be instantiated for different purposes through application profiles. The one or more policies are defined by the service provider and/or a user. Subsequently, the application/service marketplace manager (1110) may handle a list of enabled services from which users can provision resources in the plurality of edge nodes (200).

In accordance with an embodiment of the present invention, the multi access controller manager (1122) include a centralized configuration manager (1122a), a topology manager (1122b), an intent manager (1122c), a service provider registry manager (1122d), a state event manager (1122e) and a high availability manager (1122f). In particular, the intent manager (1122c) may enable a support for placement of workloads in the right edge locations and this is completely intent driven. With the intent derived from the user requested, applications can be dynamically deployed or modified in the edge locations.

The topology manager (1122b) determines what topology will be suitable for an application. Some of the options may include, but not limited to, mesh networking protocols, such as Zigbee or DigiMesh, as well as point-to-point or point-to-multipoint supports. The service provider registry manager (1122d) may provide information about registry along with location and status of the edge node and configuration properties.

In accordance with an embodiment of the present invention, the edge management controller (1124) may include a multi cloud manager (1124a), a service mesh manager (1124b), and a cluster manager (1124c). The edge management controller (1124) may be operated and coupled with the edge node (200) and the centralized data center server (1128). The centralized data center server (1128) may be, for example, but not limited to, the Amazon Web Service (AWS)^{®}, Azure^{®}, On-premises software, a Google Cloud Platform (GCP)^{®}, and Telco Cloud^{®}. The edge node (200) may be, for example, but not limited to, the on-premise server edges (1126a), the access server edges (1126b), the regional server edges (1126c). The regional server edges (1126c) may be Kubernetes and OpenStack. The Kubernetes is an open-source container-orchestration system for automating computer application deployment, scaling, and management purpose. The OpenStack is a standard cloud computing platform, mostly deployed as infrastructure-as-a-service in both public and private clouds where virtual servers and other resources are made available to users. In an example, the access edge server (1126b) may provide a service that gives users a trusted connection for inbound and outbound traffic.

In accordance with an embodiment of the present invention, the multi access controller manager (1122) is configured to switch the network connection, for example, from a first network controller (i.e., open RAN controller (1130c)) to the second network controller (i.e., pWiFi controller (1130b)) in the plurality of network controllers. The plurality of network controllers may be, for example, but not limited to, the open RAN controller (1130c), the pWiFi controller (1130b), the pFTTx controller (1130a), an SDWAN controller (1130d), a network core controller (1130e) and an open transport controller (1130f). The pFTTx controller (1130a) may be connected with the pFTTx network (1132a). The pWiFi controller (1130b) may be coupled with the pWiFi network (1132b). The open RAN controller (1130c) may be coupled with the radio access network (1132c). The SDWAN controller (1130d) may be coupled with the SDWAN network (1134). The open transport controller (1130f) may be coupled with the open transport network (1136).

Further, the architecture (1000) may include an edge management support component, an edge slicing support component, a multi-tenant support component, a network functions deployment support component and an application management and deployment support component. The edge management support component supports management of various types of edge infrastructure i.e. On Premise, Telco Network Edge, Cloud Provider Edge like AWS, Azure and GCP. The edge management service component supports Day 0 infrastructure provisioning and Day 1 provisioning of Kubernetes clusters in the edge node. This also enables the support for dynamic provisioning of large scale clusters, network and security management.

In accordance with an embodiment of the present invention, the edge slicing support component supports dynamic slicing requirements configuration across edge deployments for various consumer edge services. The multi-tenant support component supports multiple application and services providers with optimized common edge infrastructure resources, this enables data, infrastructure operation separates across enterprise users.

The network functions deployment support component enables the deployment and management of network functions for example: UPF to enable edge application traffic steering to the core network services. Similarly, this service enables the support for other network services functions required to leverage edge computing environments. The application management and deployment support component enable the support for composite cloud native application deployment and its lifecycle management. This component also accelerates the developer velocity of dynamic and consistent deployment across edge infrastructures.

The embodiments disclosed herein can be implemented using at least one software program running on at least one hardware device and performing network management functions to control the elements.

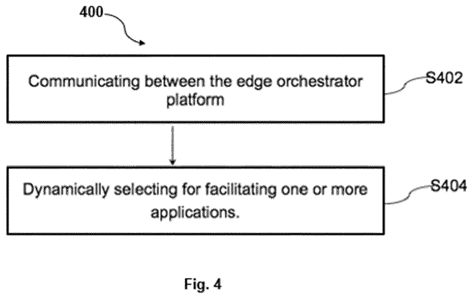

Fig. 4 is a flowchart illustrating a method for providing the converged network infrastructure in accordance with an embodiment of the present invention. The method starts at step S402 and proceeds to step S404. At step S402, the edge orchestrator platform (100) and the plurality of network controllers (300) communicates. At step S404, a network controller is dynamically selected from the plurality of network controllers for facilitating one or more applications.

Overall, the present disclosure provides switching of network controllers (corresponding to different last mile networks) and respective adjustment of workloads on different edge nodes, for efficient resource allocation from edge nodes and to push data and application from a master orchestrator to an open edge orchestrator platform. Also, connects a plurality of edge nodes with multiple network controllers corresponding to a different network technology. Thus, utilizing resources from multiple edge nodes intelligently by dynamically allocating and freeing resources based on resource demand by a plurality of applications. Further, adjust workloads on different edge nodes to provide services to an end user via the network controller by enabling one or more vendor independent Application Programming Interface. And, allows switching between multiple network controllers in a flexible manner, so as to achieve an efficient resource utilization and a low latency computation in the edge orchestrator platform.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only byway of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one ofY, or at least one of Z to each be present.

In a case that no conflict occurs, the embodiments in the present disclosure and the features in the embodiments may be mutually combined.

The foregoing descriptions are merely specific implementations of the present disclosure but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An edge orchestrator platform (100) for providing a converged network infrastructure, **characterized in that**:
a multi access controller (110) is operably connected to a plurality of edge nodes (200), a plurality of network controllers (300), and a plurality of user devices;
the plurality of user devices (400) are operably connected to the plurality of network controllers (300); and
an intelligent allocation unit (120) is operably configured for dynamic allocation of resources from the plurality of edge nodes (200) to one or more applications at the plurality of network controllers (300).

2. The edge orchestrator platform (100) as claimed in claim 1, wherein the edge orchestrator platform (100) is connected to a global service orchestrator (1102a).

3. The edge orchestrator platform (100) as claimed in claim 1 or claim 2, wherein the plurality of network controllers (300) corresponds to a one or more last mile networks (1132).

4. The edge orchestrator platform (100) as claimed in claim 3, wherein the one or more last mile networks (1132) comprises at least one of a passive optical network (1132a), a radio access network (1132c), and a Wireless Fidelity (Wi-Fi) network (1132b).

5. The edge orchestrator platform (100) as claimed in any preceding claim, wherein the edge orchestrator platform (100) comprising a switching unit (130) configured to switch a network connection from a first network controller to a second network controller in the plurality of network controllers (300).

6. The edge orchestrator platform (100) as claimed in any preceding claim, wherein the edge orchestrator platform (100) comprising a resource unit (140) configured to push one or more network resources from the global service orchestrator (1102a) to at least one of the plurality of edge nodes (200).

7. The edge orchestrator platform (100) as claimed in any preceding claim, wherein edge orchestrator platform (100) is a local orchestrator to the plurality of edge nodes (200) and the plurality of network controllers (300).

8. The edge orchestrator platform (100) as claimed in any preceding claim, wherein the edge orchestrator platform (100) adjusts one or more workloads on at least one of the plurality of edge nodes (200) by enabling one or more vendor independent application programming interfaces (APIs).

9. A method for providing a converged network infrastructure using an edge orchestration platform (100) connected to a global service orchestrator (1102a), **characterized by** following steps:
connecting a plurality of edge nodes (200) to a plurality of network controllers (300), and a plurality of user devices (400) to the plurality of network controllers (300);
pushing one or more resources from the global service orchestrator (1102a) to the edge orchestration platform (100);
dynamically allocating one or more resources from the plurality of edge nodes (200) to one or more applications at the plurality of network controllers (300); wherein the plurality of network controllers (300) corresponds to one or more last mile networks (1132)..

10. The method as claimed in claim 9, wherein the method further comprises:
communicating between the edge orchestrator platform (100) and the plurality of network controllers (300); and
dynamically selecting a network controller from the plurality of network controllers for facilitating one or more applications.

11. The method as claimed in claim 9 or claim 10, wherein the plurality of network controller (300) includes at least one or more of passive optical network (1132a), a radio access network (1132c), and a Wi-Fi network (1132b).

12. The method as claimed in claim 9 to 11, wherein the method comprises connecting the edge orchestrator platform (100) to a global service orchestrator (1102a).

13. The method as claimed in claim 12, wherein the edge orchestrator platform (100) is a local orchestrator to the plurality of edge nodes (200) and the plurality of network controllers (300).

14. The method as claimed in claim 9 to 13, wherein the method further comprising switching a network connection from a first network controller to a second network controller in the plurality of network controllers (300).

15. The method as claimed in claim 9 to 14, wherein the method further comprising a step of adjusting one or more workloads on at least one of the plurality of edge nodes (200) by enabling one or more vendor independent application programming interfaces (APIs).
